# EUROPÄISCHE PATENTANMELDUNG

(11) **EP 2 846 496 A1**
(43) Veröffentlichungstag der Anmeldung: **11.03.2015**
(21) Anmeldenummer: 14173911.0
(22) Anmeldetag: 25.06.2014
(51) Int. Cl.: H04L 12/18

(54) **Funkknoten zum Einsatz in einem taktischen militärischen IP- Funknetz und IP-Funknetz mit solchen Funkknoten**

(30) Priorität: 09.09.2013 DE 102013217999
(71) Anmelder: Thales Deutschland GmbH, 70435 Stuttgart (DE)
(72) Erfinder: Mönch, Egon, 75196 Remchingen (DE)
(74) Vertreter: DREISS Patentanwälte PartG mbB

(57) **Zusammenfassung**

Die Erfindung betrifft einen Funkknoten (23) zum Einsatz in einem taktischen militärischen IP-Funknetz (21) als Schnittstelle zwischen einem Broadcast Funkkanal (22) des IP-Funknetzes (21) und mindestens einem an den Funkknoten (23) angeschlossenen Endgerät (4, 5, 6, 7, 8). Um die Installation und Einrichtung des IP-Funknetzes (21) zu vereinfachen und beschleunigen, wird vorgeschlagen, dass der Funkknoten (23) erste Mittel zur transparenten Weiterleitung aller von dem Broadcast Funkkanal (22) eingehenden IP-Datenpakete (38a) an alle angeschlossenen Endgeräte (4, 5, 6, 7, 8) aufweist. Die Erfindung betrifft auch ein IP-Funknetz (21) mit solchen Funkknoten (23).

## Beschreibung

Die vorliegende Erfindung betrifft einen Funkknoten zum Einsatz in einem taktischen militärischen IP (Internet Protokoll)-Funknetz als Schnittstelle zwischen einem Broadcast Funkkanal des IP-Funknetzes und mindestens einem an den Funkknoten angeschlossenen Endgerät. Ferner betrifft die Erfindung ein taktisches militärisches IP-Funknetz mit mehreren Funkknoten als Schnittstelle zwischen einem Broadcast Funkkanal des IP-Funknetzes und mindestens einem jeweils an einen der Funkknoten angeschlossenen Endgerät.

In IP-basierten Funknetzen werden Daten und Sprache in IP-Datenpaketen digital übertragen. Die Funkknoten bilden dabei eine Schnittstelle zwischen einem Broadcast Funkkanal des IP-Funknetzes und mindestens einem an den Funkknoten angeschlossenen Endgerät. In gängigen IP-basierten Funknetzen sind üblicherweise mehrere Funkknoten vorgesehen, die jeweils einerseits eine Verbindung zu dem Broadcast Funkkanal eines IP-Netzes und andererseits eine Verbindung zu mindestens einem angeschlossenen Endgerät herstellen. Aus dem Stand der Technik bekannte Funkknoten nutzen Routingtabellen, in denen abgelegt ist, wohin die Datenpakete eines bestimmten Endgeräts weitergeleitet werden sollen. Die Routingtabellen müssen vor der ersten Inbetriebnahme des IP-Funknetzes anhand der Topologie, der Anzahl und Anordnung der Funkknoten und Endgeräte und anhand weiterer Anforderungen an das IP-Funknetz manuell erstellt werden. Aus diesem Grund müssen taktische militärische IP-basierte Funknetze von geschultem Fachpersonal konfiguriert werden. Auch Änderungen in der Topologie, insbesondere eine Änderung der Anzahl der angeschlossenen Funkknoten und/oder Endgeräte sowie eine Positionsänderung von angeschlossenen Endgeräten und/oder Funkknoten, sind schwierig und nicht von einfachem Bedienpersonal zu erledigen.

In aktuellen militärischen Funknetzen, die IP-Datenpakete übertragen, sind jedem Funkknoten zwei IP-Adressen zugewiesen. Die eine IP-Adresse gehört zu dem IP-Funknetz, über das die Datenpakete zu anderen Funkknoten und Endgeräten übertragen werden, und die andere IP-Adresse gehört zu dem Netz, in dem die IP-Endgeräte angeordnet sind. Alle IP-Endgeräte, die hinter einem Funkknoten angeschlossen werden, sind so konfiguriert, dass sie demselben Netz wie der Funkknoten angehören. Sollen Daten von einem Netz (definiert durch einen Funkknoten und die daran angeschlossenen Endgeräte) in ein anderes Netz hinter einem anderen Funkknoten übertragen werden, müssen entsprechende Routing-Pfade gesetzt werden, damit die Datenpakete von dem einen IP-Netz (des sendenden Endgeräts) über den Funkkanal des Funk-IP-Netzes in das andere IP-Netz (des adressierten Endgeräts) gelangen können. Zwei IP-Endgeräte, die miteinander kommunizieren wollen, können nicht für dasselbe IP-Netz konfiguriert sein.

Es hat sich gezeigt, dass die Konfiguration der an einer IP-Datenübertragung beteiligten IP-Knoten sehr aufwändig und langwierig ist. Umfangreiche Netzwerkkenntnisse sind erforderlich. Eine Konfiguration von einigen wenigen Funkknoten mit z. B. angeschlossenem KommServer dauert viele Stunden oder gar Tage. Und bei neu hinzukommenden Knoten muss alles überarbeitet werden. Außerdem kann die Konfiguration der Funkknoten und der dahinterliegenden IP-Endgeräte- wie gesagt - nur durch geschultes Fachpersonal durchgeführt werden, jedoch nicht von militärischen Einsatzkräften vor Ort. Das stellt eine erhebliche Einschränkung bezüglich der Einrichtung und des Einsatzes bekannter IP-Funknetze dar.

Ausgehend von dem beschriebenen Stand der Technik liegt der vorliegenden Erfindung die Aufgabe zugrunde, Funkknoten derart auszugestalten und weiterzubilden, dass die Initialisierung und der Einsatz der IP-Funknetze deutlich vereinfacht werden. Insbesondere soll es möglich sein, dass militärische Einsatzkräfte vor Ort, die keine tiefgehenden Kenntnisse bezüglich IP-Funknetzen haben, in der Lage sind, IP-Funknetze einzurichten, zu ändern (z.B. Hinzufügen und Herausnehmen von Endgeräten) und zu betreiben.

Zur Lösung dieser Aufgabe wird ausgehend von dem Funkknoten der eingangs genannten Art vorgeschlagen, dass der Funkknoten erste Mittel zur transparenten Weiterleitung aller von dem Broadcast Funkkanal eingehender IP-Datenpakete an alle angeschlossenen Endgeräte aufweist.

Ein taktisches militärisches Funknetz für IP-Datenübertragung wird vorgeschlagen, das sich für alle IP-Datenpakete transparent verhält und somit die Funktionalität (möglichst ähnlich) eines dynamischen Hubs und/oder Switches bekommt. Dazu sind Software Erweiterungen im Betriebssystem eines Radios erforderlich (Radio-IP-Hub-Software). Während ein Router eine Routingtabelle mit Routingeinträgen zum Weiterleiten der Datenpakete benötigt, verfügen Hubs und Switches nicht über eine Routingtabelle. Ein Hub mit einer bestimmten Anzahl von Anschlüssen empfängt ein Datenpaket an einem der Anschlüsse und leitet es immer an alle übrigen Anschlüsse weiter. Ein Switch arbeitet ähnlich wie ein Hub, ist allerdings lernfähig. D.h. der Switch leitet beim ersten Mal ein an einem seiner Anschlüsse empfangenes Datenpaket an alle übrigen Anschlüsse weiter. Der Switch erhält eine Rückantwort von dem Endgerät, für das das Datenpaket bestimmt war und das es empfangen hat. In Zukunft wird der Switch Datenpakete von diesem Anschluss immer an den entsprechenden Anschluss bzw. das darüber erreichbare Endgerät weiterleiten.

Als Endgeräte können beliebige leitungsgebundene oder schnurlose Endgeräte an den Funknoten angeschlossen werden. Insbesondere umfassen die angeschlossenen Endgeräte Mobiltelefone, Tablet-PCs, Laptop-PCs, Desktop-PCs und WLAN (oder WiFi)-Router, an die wiederum WLAN (oder WiFi)-fähige Endgeräte angeschlossen sein können.

Die einzelnen Funkknoten bekommen keine IP-Adresse. Stattdessen bekommen sie eine Radio-IP-Hub-Software, die dafür sorgt, dass sich ein einzelner Funkknoten wie ein Port eines Hubs/Switches verhält. D.h. eine Ethernet-Schnittstelle eines Funkknotens gibt, ähnlich einer Ethernet-Schnittstelle eines Hub/Switch, broadcastmäßig alle IP-Datenpakete, die der Funkknoten über die Ethernet-Schnittstelle erhält, an alle anderen Funkknoten des IP-Funknetzes über den Broadcast-Funkkanal weiter, und an den Ethernet-Schnittstellen aus. Datenpakete müssen nicht mehrfach übertragen werden, da der Funkkanal physikalisch ein Broadcastkanal ist. Alle Empfangs-Funkknoten empfangen ausgesendete Pakete quasi-gleichzeitig. Jeder einzelne Funkknoten des IP-Funknetzes gibt alle Datenpakete, die er über den Funkkanal erhält, über seine Ethernet-Schnittstelle weiter. Endgeräte, für die ein Datenpaket bestimmt ist, empfangen und verarbeiten es, während die anderen Endgeräte es einfach ignorieren.

Mit der vorliegenden Erfindung ist es möglich, dass Datenpakete an Endgeräte weitergeleitet werden, die in dem gleichen IP-Netz angeordnet sind wie das sendende Endgerät, jedoch hinter einem anderen Funkknoten liegen können. Liegen Sender und Empfänger eines Datenpakets hinter einem gemeinsamen Funkknoten, entsteht kein zusätzlicher Funkverkehr, da ein Switch zwischen dem Funkknoten und dem dahinter liegenden Endgeräten kein Datenpaket zum Funkknoten weiterleitet. Die Funknoten beachten die IP-Adresse nicht, da sie für die Weiterleitung des Datenpakets ohne Bedeutung ist. Es werden immer alle über einen Anschluss empfangene Datenpakete broadcastmäßig an die übrigen Anschlüsse weitergeleitet, unabhängig von der in den Datenpaketen enthaltenen IP-Adressen der Endgeräte, für die die Datenpakete bestimmt sind. Allerdings ist es denkbar, dass die Endgeräte die Datenpakete im Hinblick auf die darin enthaltenen IP-Adressen analysieren und ein Endgerät ein Datenpaket empfängt, falls es für das Endgerät bestimmt ist.

Ein angeschlossenes IP-Gerät sieht keine IP-Adresse eines Funkknotens (Transparenz), es sendet IP-Pakete nur an Kommunikationspartner im eigenen Netz oder an Kommunikationspartner hinter weiteren transparenten Funkknoten, die ebenfalls im selben Netz konfiguriert sind. IP-Geräte hinter anderen Funkknoten sind somit, wenn sie in demselben Netz konfiguriert sind, direkt erreichbar. Es müssen keine getrennte Netze, oder gar Routing Pfade konfiguriert werden. Netze können auch wie üblich gemischt werden, ein Routing für die Funkübertragung braucht ebenfalls nicht berücksichtigt zu werden.

Das Funknetz verhält sich transparent, wie ein Hub. Es sind dabei keinerlei Konfigurationen auf Seiten der Funkknoten notwendig. Grundsätzlich wird jedes IP-Paket broadcastmäßig über Funk weitergeleitet. Wenn nur ein einzelnes IP-Gerät an den Funkknoten angeschlossen ist, dann sollen alle Datenpakete des IP-Gerätes über Funk weitergeleitet werden. Wenn mehrere IP-Geräte an einen Funkknoten angeschlossen sind, dann ist stets ein Switch in irgendeiner Form (z.B. Switch oder WLAN bzw. WiFi-Router) dazwischen geschaltet. Die angeschlossenen Switche sind lernfähig und geben grundsätzlich nur einmalig Pakete auf allen Ports aus. Der Lernprozess erfolgt über das ARP (Address Resolution Protocol). Im Switch werden vorzugsweise MAC (Media Access Control)-Adressen gespeichert, die über wenige IP-Pakete angefordert werden. Bei weiteren Übertragungen werden IP-Pakete nur noch an diejenigen Ports ausgegeben, wo auch ein entsprechender Empfänger im dahinterliegenden Netz angeschlossen ist. Nur während der "Lernzeit" eines Switches wird somit ein erhöhter Datenverkehr über das Funknetz anfallen.

Soll ein Funkknoten mehrere IP-Stecker haben, dann kann ein Switch, falls nicht vorhanden, dazu eingebaut sein. Unnötiger Datenverkehr wird also durch einen vorgeschalteten Switch verhindert. Der Funkkonten selbst braucht hierauf keine Rücksicht zu nehmen, er kann einfach alle ankommenden Pakete über den Funkkanal weiterleiten.

Gemäß einer vorteilhaften Weiterbildung der vorliegenden Erfindung sind dem Funkknoten - zur Realisierung der Switch-Funktionalität - neben den ersten Mitteln zur transparenten Weiterleitung aller von dem Broadcast Funkkanal eingehender IP-Datenpakete an alle angeschlossenen Endgeräte zweite Mittel zum Empfang einer Rückmeldung von dem mindestens einen angeschlossenen Endgerät zugeordnet, für das bestimmte weitergeleitete IP-Datenpakete bestimmt waren. Ferner wird vorgeschlagen, dass dem Funkknoten dritte Mittel zugeordnet sind, um nach dem Empfang einer Rückmeldung in Zukunft die bestimmten IP-Datenpakete nur noch an das mindestens eine angeschlossene Endgerät weiterzuleiten, von dem die zweiten Mittel eine Rückmeldung empfangen haben.

Gemäß einer anderen vorteilhaften Weiterbildung der Erfindung wird vorgeschlagen, dass der Funkknoten vierte Mittel zum Einlesen und Auswerten zumindest von Adressinformationen der eingehenden IP-Datenpakete aufweist. Gemäß dieser Weiterbildung wertet der Funkknoten die in den IP-Datenpaketen enthaltenen IP-Adressen der adressierten Endgeräte aus, allerdings nicht, um diese Informationen für die Weiterleitung der Datenpakete zu nutzen. Es wird vorgeschlagen, dass die vierten Mittel des Funkknotens feststellen, ob die bei dem Funkknoten eingehenden IP-Datenpakete für den Funkknoten selbst bestimmt sind oder für ein Endgerät. Der Funkknoten leitet die eingehenden IP-Datenpakete vorzugsweise nur dann an die angeschlossenen Endgeräte weiter, wenn die IP-Datenpakete nicht für den Funkknoten selbst bestimmt sind. Falls der Funkknoten feststellt, dass die eingehenden Datenpakete für ihn selbst bestimmt sind, kann der die IP-Datenpakete empfangen und weiterverarbeiten. Auf diese Weise wäre es bspw. möglich, ein Software-Update des Funkknotens durchzuführen oder den Funkknoten selbst zu konfigurieren (z.B. Webserver), etc.

Gemäß einer bevorzugten Ausführungsform der Erfindung wird vorgeschlagen, dass die vierten Mittel des Funkknotens auch die IP-Adresse des sendenden Endgeräts einlesen und auswerten. Dadurch kann der Funkknoten feststellen, ob die bei ihm eingehenden IP-Datenpakete von einer zulässigen Absenderadresse stammen und/oder für eine zulässige Empfängeradresse bestimmt sind. Vorzugsweise leitet der Funkknoten die eingehenden IP-Datenpakete nur dann an die angeschlossenen Endgeräte weiter, wenn die IP-Datenpakete von einer zulässigen Absenderadresse stammen und/oder für eine zulässige Empfängeradresse bestimmt sind.

Vorzugsweise sind die zulässigen Absenderadressen und/oder die zulässigen Empfängeradressen in einer Whitelist in dem Funkknoten abgespeichert sind. Der Inhalt der Whitelist könnte bspw. jedes Mal nach einem Einschalten und Hochfahren des IP-Funknetzes oder aber einmalig nach einer Installation und Einrichtung des IP-Funknetzes an die Funkknoten übermittelt werden. Die Whitelist könnte über für den Funkknoten bestimmte IP-Datenpakete an den Funkknoten übertragen werden. Die Whitelist kann in einem beliebigen Speicherbereich oder Speicherelement des Funkknotens abgespeichert werden. Der Speicherbereich oder das Speicherelement kann bspw. ein RAM (Random Access Memory), ein EPROM (Erasable Programmable Read Only Memory), EEPRO, Flash-Speicher oder eine Festplatte sein.

Es ist denkbar, dass alternativ oder zusätzlich zu der Whitelist die unzulässigen Absenderadressen und/oder die unzulässigen Empfängeradressen in einer Blacklist in dem Funkknoten abgespeichert sind. Die Übertragung der Blacklist und das Abspeichern in dem Funkknoten kann in der oben bereits für die Whitelist beschriebenen Art und Weise erfolgen.

Gemäß einer anderen vorteilhaften Weiterbildung der vorliegenden Erfindung wird vorgeschlagen, dass der Funkknoten fünfte Mittel zum Ermitteln und Abspeichern von Informationen bezüglich anderer Funkknoten des IP-Funknetzes, die über den Funkknoten erreichbar sind, und bezüglich der an diese anderen Funkknoten angeschlossenen Endgeräte aufweist. Diese Informationen können nach der Installation und Einrichtung des IP-Funknetzes manuell in den Funkknoten eingegeben werden. Ebenso können die Informationen über IP-Datenpakete, die für den Funkknoten bestimmt sind, an diesen übermittelt werden. Schließlich wäre es auch denkbar, dass der Funkknoten lernfähig ist und während des bestimmungsgemäßen Betriebs diese Informationen sammelt.

Es wird vorgeschlagen, dass die fünften Mittel nur Informationen bezüglich der ausschließlich über den Funkknoten erreichbaren anderen Funkknoten des IP-Funknetzes und der an diese anderen Funkknoten angeschlossenen Endgeräte ermitteln und abspeichern.

Weitere Merkmale und Vorteile der Erfindung werden nachfolgend anhand der Figuren näher erläutert. Es zeigen:
Fig. 1 eine beispielhafte Topologie eines aus dem Stand der Technik bekannten IP-Funknetzes;
Fig. 2 eine beispielhafte Topologie eines erfindungsgemäßen IP-Funknetzes mit erfindungsgemäßen IP-Funkknoten;
Fig. 3 eine erste Realisierungsmöglichkeit des erfindungsgemäßen IP-Funkknotens;
Fig. 4 eine zweite Realisierungsmöglichkeit des erfindungsgemäßen IP-Funkknotens;
Fig. 5 eine dritte Realisierungsmöglichkeit des erfindungsgemäßen IP-Funkknotens;
Fig. 6 eine weitere beispielhafte Topologie eines erfindungsgemäßen IP-Funknetzes; und
Fig. 7 eine vierte Realisierungsmöglichkeit des erfindungsgemäßen IP-Funkknotens.

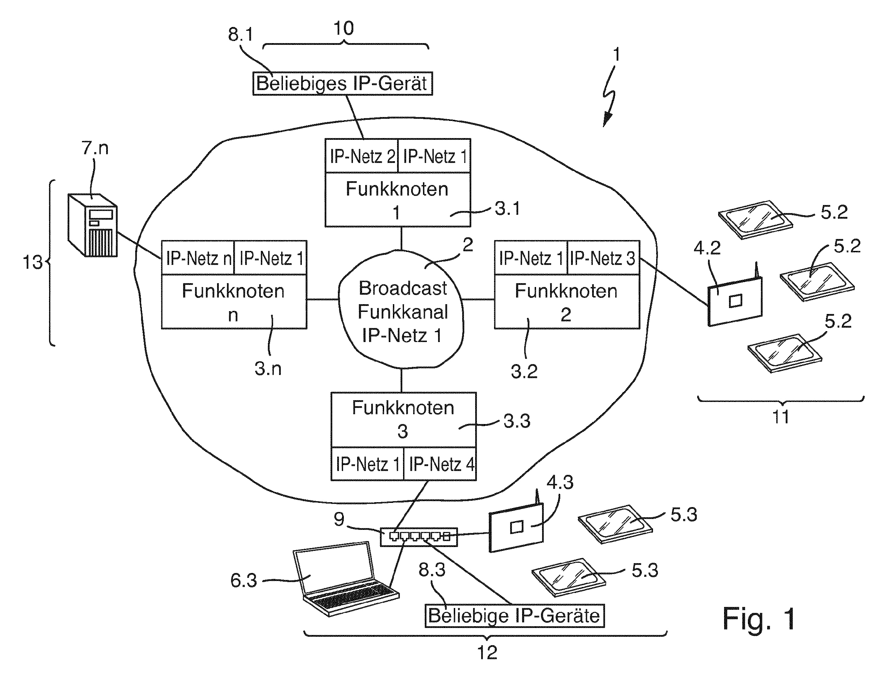

In IP-basierten Funknetzen werden Daten und Sprache in IP-Datenpaketen digital übertragen. In Figur 1 ist ein aus dem Stand der Technik bekanntes IP-Funknetz mit einer beispielhaften Topologie in seiner Gesamtheit mit dem Bezugszeichen 1 bezeichnet. Das Funknetz 1 umfasst einen Broadcast-Funkkanal 2, der symbolisch als Wolke dargestellt ist. Ferner umfasst das IP-Funknetz 1 mehrere daran angeschlossene Funkknoten 3.1, 3.2, 3.3, 3.n. An die Funkknoten 3.1 bis 3.n sind außerdem IP-Endgeräte angeschlossen. Die Endgeräte sind bspw. als ein WLAN (oder WiFi)-Router 4, mit daran angeschlossenen WLAN-fähigen Geräten, bspw. in Form von Tablet-PCs 5, als ein Laptop-PC 6, als ein normaler PC 7 oder als ein beliebig anderes IP-Gerät 8 ausgebildet. Wenn mehrere Endgeräte 4 bis 8 an einem Funkknoten 3.1 bis 3.n angeschlossen sind, kann dies über einen Hub oder einen Switch erfolgen. In Figur 1 kennzeichnet die Erweiterung ".1", ".2", ".3", ".n" hinter den Bezugszeichen 4 bis 8 für die Endgeräte den Funkknoten, an den die Endgeräte 4 bis 8 angeschlossen sind. Mittels der IP-Endgeräte 4 bis 8 können mittels digitaler Datenpakete Daten und/oder Sprache über den Broadcast-Funkkanal 2 von einem der Endgeräte 4 bis 7 zu einem anderen Endgerät 4 bis 8 übertragen werden. Die Funkknoten 3.1 bis 3.n bilden dabei eine Schnittstelle zwischen dem Broadcast Funkkanal 2 des IP-Funknetzes 1 und den angeschlossenen Endgeräten 4 bis 8.

In gängigen IP-basierten Funknetzen 1 sind üblicherweise mehrere Funkknoten 3.1 bis 3.n vorgesehen, die jeweils einerseits eine Verbindung zu dem Broadcast Funkkanal 2 des IP-Netzes 1 und andererseits eine Verbindung zu mindestens einem angeschlossenen Endgerät 4 bis 8 herstellen. Aus dem Stand der Technik bekannte Funkknoten nutzen Routingtabellen, in denen als Routingeinträge abgelegt ist, wohin eingehende Datenpakete eines bestimmten Endgeräts 4 bis 8 weitergeleitet werden sollen. Die Routingtabellen müssen vor der ersten Inbetriebnahme des IP-Funknetzes 1 anhand der Topologie, der Anzahl und Anordnung der Funkknoten und Endgeräte und anhand weiterer Anforderungen an das IP-Funknetz 1 manuell erstellt werden. Aus diesem Grund müssen taktische militärische IP-basierte Funknetze 1 von geschultem Fachpersonal konfiguriert werden. Auch Änderungen in der Topologie, insbesondere eine Änderung der Anzahl der angeschlossenen Funkknoten und/oder Endgeräte sowie eine Positionsänderung von angeschlossenen Endgeräten 4 bis 8 und/oder Funkknoten 3.1 bis 3.n, sind schwierig und nicht von einfachem Bedienpersonal zu erledigen.

In aktuellen militärischen Funknetzen, die IP-Datenpakete übertragen, sind jedem Funkknoten 3.1 bis 3.n zwei IP-Adressen zugewiesen. Die eine IP-Adresse "IP-Netz 1" gehört zu dem IP-Funknetz 2, über das die Datenpakete zu anderen Funkknoten 3.1 bis 3.n und Endgeräten 4 bis 8 übertragen werden, und die andere IP-Adresse "IP-Netz 2", "IP-Netz 3", "IP-Netz 4", "IP-Netz n" gehört zu dem Netz, in dem die an den jeweiligen Funkknoten 3.1 bis 3.n angeschlossenen IP-Endgeräte 4 bis 8 angeordnet sind. Das der Adresse "IP-Netz 2" zugeordnete Netz ist mit dem Bezugszeichen 9, das der Adresse "IP-Netz 3" zugeordnete Netz mit dem Bezugszeichen 10, das der Adresse "IP-Netz 4" zugeordnete Netz mit dem Bezugszeichen 11 und das der Adresse "IP-Netz n" zugeordnete Netz mit dem Bezugszeichen 12 bezeichnet. Alle IP-Endgeräte 4 bis 8, die hinter einem Funkknoten 3.1 bis 3.n angeschlossen sind, sind so konfiguriert, dass sie demselben Netz 9 bis 12 wie der Funkknoten 3.1 bis 3.n angehören. Sollen Daten von einem Netz 9 bis 12 in ein anderes Netz 9 bis 12 hinter einem anderen Funkknoten 3.1 bis 3.n übertragen werden, müssen entsprechende Routing-Pfade gesetzt werden, damit die Datenpakete von dem einen IP-Netz 9 bis 12 des sendenden Endgeräts 4 bis 8 über den Broadcast Funkkanal 2 in das andere IP-Netz 9 bis 12 des adressierten Endgeräts 4 bis 8 gelangen können. Zwei IP-Endgeräte 4 bis 8, die miteinander kommunizieren wollen, können im Stand der Technik nicht für dasselbe IP-Netz 9 bis 12 konfiguriert sein.

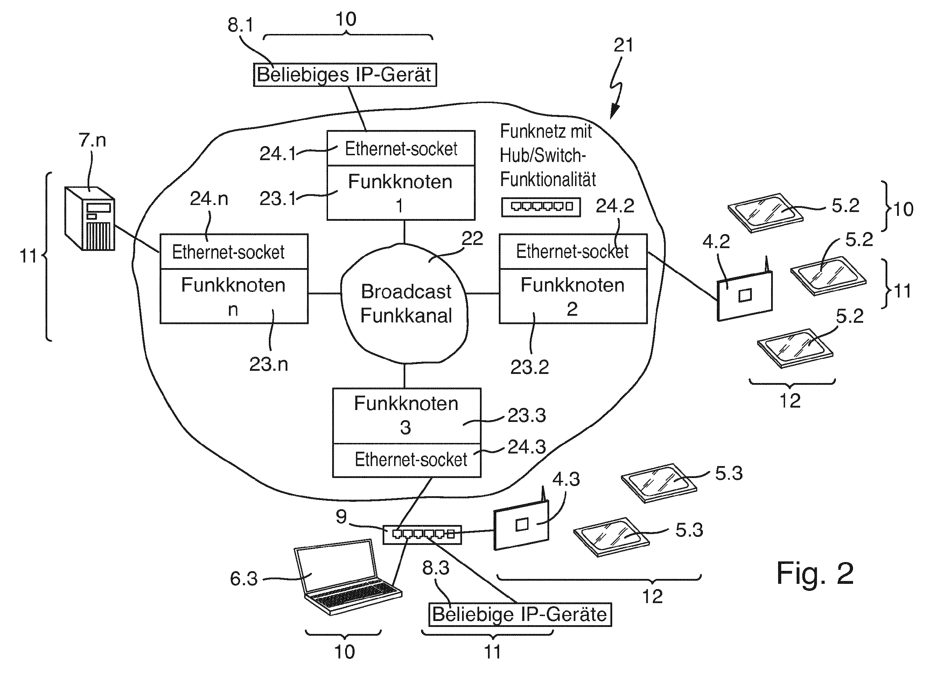

Die Konfiguration der bekannten Funkknoten 3.1 bis 3.n und der dahinterliegenden IP-Endgeräte 4 bis 8 kann nur durch geschultes Fachpersonal durchgeführt werden. Damit die Einrichtung und Installation von IP-Funknetzen 1 vereinfacht wird und auch von auf dem Gebiet der IP-Funknetze ungeschulten militärischen Einsatzkräften vor Ort durchgeführt werden, wird ein IP-Funknetz 21 vorgeschlagen, wie es mit einer beispielhaften Topologie in Figur 2 gezeigt ist. Das Funknetz 21 hat einen Broadcast-Funkkanal 22, an den verschiedene erfindungsgemäße Funkknoten 23.1, 23.2, 23.3, 23.n angeschlossen sind. Der Funkkanal 22 ist ebenso wie der Funkkanal 2 Teil eines IP-Netzes, was jedoch bei der Übertragung der Datenpakete mittels der erfindungsgemäßen Funkknoten 23 nicht von Bedeutung ist. An diese sind andererseits die Endgeräte 4 bis 8 entweder unmittelbar oder über einen Hub oder Switch 9 angeschlossen. Die an einen Funkknoten 23.1 bis 23.n angeschlossenen Endgeräte 4 bis 8 können auch unterschiedlichen IP-Netzen 10, 11, 12 zugeordnet sein. Ein angeschlossenes Endgerät 4 bis 8 sieht keine IP-Adresse eines Funkknotens 23.1 bis 23.n, es sendet IP-Datenpakete nur an Kommunikationspartner 4 bis 8 im eigenen IP-Netz 10 bis 12 oder an Kommunikationspartner 4 bis 8 hinter weiteren transparenten Funkknoten 23.1 bis 23.n. IP-Endgeräte 4 bis 8 hinter anderen Funkknoten 23.1 bis 23.n sind somit direkt erreichbar, wenn sie in demselben IP-Netz 10 bis 12 konfiguriert sind. Es müssen keine getrennten Netze, oder gar Routing Pfade konfiguriert werden.

Im Rahmen der Erfindung wird insbesondere vorgeschlagen, dass jeder der Funkknoten 23.1 bis 23.n zur transparenten Weiterleitung von allen von dem Broadcast Funkkanal 22 bei dem Funkknoten 23.1 bis 23.n eingehenden IP-Datenpakete an alle angeschlossenen Endgeräte 4 bis 8 ausgebildet ist. Es wird also ein taktisches militärisches Funknetz 21 für IP-Datenübertragung vorgeschlagen, das sich für alle IP-Datenpakete transparent verhält und somit die Funktionalität eines dynamischen Hubs und/oder Switches aufweist.

Während ein Router eine Routingtabelle mit Routingeinträgen zum Weiterleiten der Datenpakete benötigt, verfügen Hubs und Switches nicht über eine Routingtabelle. Ein Hub mit einer bestimmten Anzahl von Anschlüssen empfängt ein Datenpaket an einem der Anschlüsse und leitet es immer an alle übrigen Anschlüsse weiter. Ein Switch arbeitet ähnlich wie ein Hub, ist allerdings lernfähig. D.h. der Switch leitet beim ersten Mal ein an einem seiner Anschlüsse empfangenes Datenpaket an alle übrigen Anschlüsse weiter. Der Switch erhält eine Rückantwort von dem Endgerät 4 bis 8, für das das Datenpaket bestimmt war und das es empfangen hat. In Zukunft wird der Switch Datenpakete von diesem Anschluss immer an den entsprechenden Anschluss bzw. das darüber erreichbare Endgerät 4 bis 8 weiterleiten.

Den einzelnen erfindungsgemäßen Funkknoten 23.1 bis 23.n sind keine IP-Adressen zugeordnet. Stattdessen bekommen sie eine Radio-IP-Hub-Software, die dafür sorgt, dass sich ein einzelner Funkknoten 23.1 bis 23.n wie ein Port eines Hubs/ Switches verhält. D.h. eine Ethernet-Schnittstelle 24.1 bis 24.n (Ethernet-socket) eines Funkknotens 23.1 bis 23.n gibt, ähnlich einer Ethernet-Schnittstelle eines Hub/ Switch, broadcastmäßig alle IP-Datenpakete, die der Funkknoten 23.1 bis 23.n über die Ethernet-Schnittstelle 24.1 bis 24.n erhält, an alle anderen Funkknoten 23.1 bis 23.n des IP-Funknetzes 21 über den Broadcast-Funkkanal 22 weiter. Datenpakete müssen nicht mehrfach übertragen werden, da der Funkkanal 22 physikalisch ein Broadcastkanal ist. Alle Empfangs-Funkknoten 23.1 bis 23.n empfangen ausgesendete Pakete quasi-gleichzeitig. Jeder einzelne Funkknoten 23.1 bis 23.n des IP-Funknetzes 21 gibt alle Datenpakete, die er über den Funkkanal 22 erhält, über seine Ethernet-Schnittstelle 24.1 bis 24.n weiter. Endgeräte 4 bis 8, für die ein Datenpaket bestimmt ist, empfangen und verarbeiten es, während die anderen Endgeräte 4 bis 8 es einfach ignorieren.

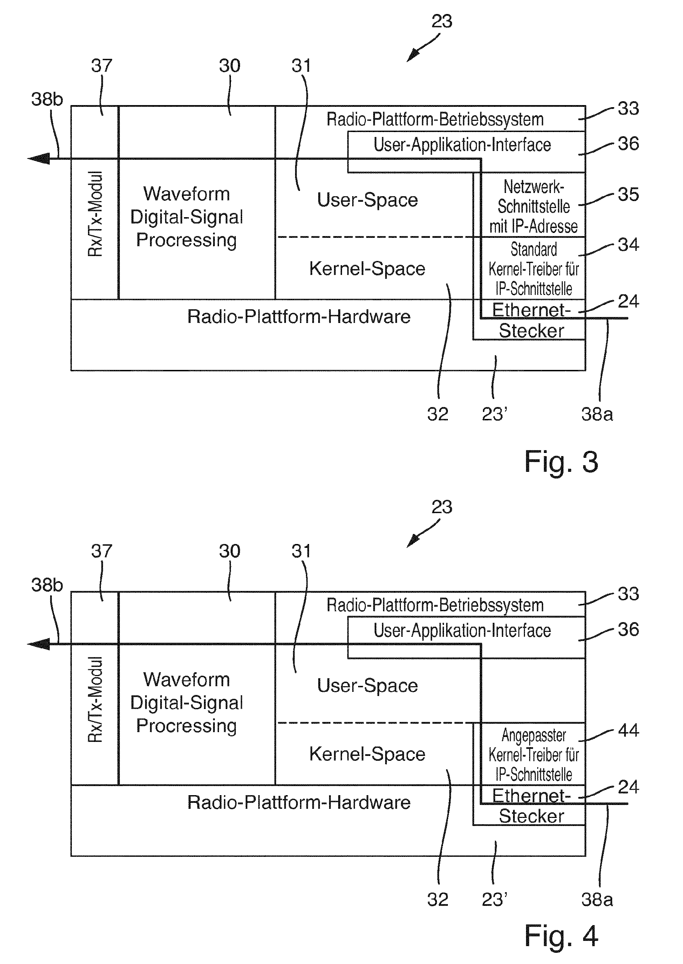

Zur Realisierung der vorliegenden Erfindung sind Software-Erweiterungen im Betriebssystem eines Funkknotens 23.1 bis 23.n erforderlich. Diese Software wird nachfolgend als Radio-IP-Hub-Software bezeichnet. Zwei Realisierungsbeispiele einer ersten Realisierungsausbaustufe sind im Folgenden aufgezeigt, wobei die Wellenform (im Wesentlichen die Beschreibung der Kommunikation über den Funkkanal 22) bzw. die Wellenform-Signalverarbeitung (Waveform Digital-Signal Processing) 30 (vgl. Figuren 3 bis 5 und 7) selbst unbeeinflusst bleibt. Die nachfolgenden Beispiele gehen davon aus, dass die Funkknoten 23 außer der Wellenform-Signalverarbeitung 30 keine Zusatzintelligenz, wie z.B. eine MANet (Mobile Ad Hoc Network)-Funktionalität, beinhalten. Mit der MANet-Funktionalität bezeichnet man eine kontinuierliche Überwachung, welche Endgeräte 4 bis 8 derzeit über welche Funkknoten 23.1 bis 23.n erreichbar sind und eine kontinuierliche Aktualisierung einer entsprechenden Liste. Diese Funktionalität verbraucht relativ viel Übertragungskapazität in dem IP-Netz 1.

### Erste Ausbaustufe (Figuren 3 und 4)

In den Figuren 3 und 4 ist jeweils ein funktionaler Aufbau eines erfindungsgemäßen Funkknotens 23 dargestellt. Eine Radio-Plattform Hardware ist mit dem Bezugszeichen 23' bezeichnet. In einer ersten Ausbaustufe könnte sich die Ethernet-Schnittstelle 24 des Funkgerätes 23 transparent für Datenpakete wie die Schnittstelle eines Hubs verhalten. Für diesen Realisierungsschritt wird davon ausgegangen, dass sich alle Endgeräte 4 bis 8 gegenseitig empfangen können. Dazu sind Softwareänderungen und -ergänzungen sowohl im User-Space 31 als auch im Kernel-Space 32 der Betriebssystemsoftware 33 notwendig.

Normalerweise stellt ein Betriebssystem einen Kernel-Treiber 34 für den Ethernet-Baustein 24 und eine logische Netzwerk-Schnittstelle 35 im User-Space 31 zur Verfügung. IP-seitig empfangene Datenpakete 38a werden vom Kernel-Treiber 34 entgegengenommen und an eine Applikation im User-Space 31 weitergeleitet. Die Radio-User-Applikation 36 übernimmt die weitere Verarbeitung und gibt die Datenpakete 38b zur Aussendung an das Modem (Rx/Tx-Modul) 37 weiter.

### Realisierungsmöglichkeit 1 (vgl. Figur 4)

In dieser Realisierung hat der Funkknoten 23 Hub-Verhalten und einen angepassten Kernel-Treiber 44. Der Kernel-Treiber 44 stellt nun keine Netzwerkschnittstelle 35 im User-Space 31 mehr bereit (vgl. Figur 3). Stattdessen nimmt der Kernel-Treiber 44 alle Daten vom Ethernet-Stecker 24 auf und gibt sie direkt an eine User-Applikation 36 weiter. Die Schnittstelle verhält sich dadurch ähnlich wie eine Schnittstelle eines Hubs.

Für das jeweilige Betriebssystem (z. B. Windows/Linux) 33 gelten folgende Voraussetzungen: Es muss möglich sein, einen eigenen Hardware-Treiber 44 für den Ethernet-Stecker 24 in den Kernel-Space 32 zu integrieren. Der Kernel-Treiber 44 benötigt direkten Zugriff auf den Ethernet-Baustein 24 und kann alle dort ankommenden Daten abgreifen oder ausgeben.

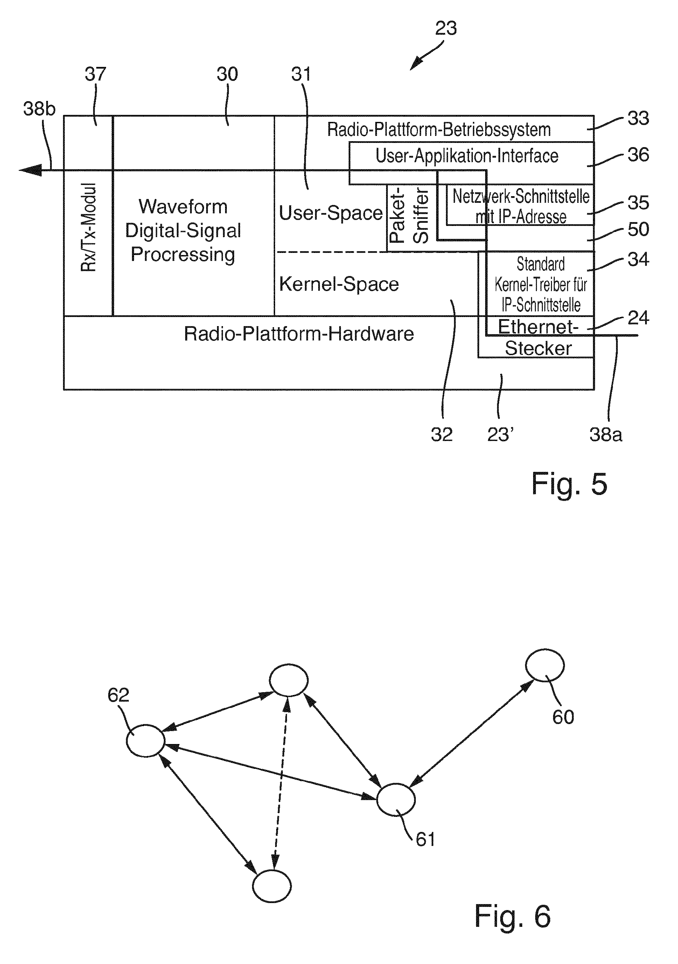

### Realisierungsmöglichkeit 2 (Figur 5)

Es wäre auch denkbar, den Kernel-Treiber 34 zu belassen und einen Packet-Sniffer (z. B. Wireshark®) 50 darüber zu legen. Der Paket-Sniffer 50 nimmt alle Datenpakete auf, die nicht an die eigene Netzwerk-Adresse gerichtet sind, und gibt sie an die User-App 36 zur Weiterleitung über den Funk (Rx/Tx-Modul 37) weiter. Bei dieser Realisierungsmöglichkeit wird die Netzwerk Software 35 des Betriebssystems 33 nicht (oder nur wenig) verändert. Die Packet-Sniffer Funktion kann über den sog. Promiscuous Mode des Funkknoten 23 aktiviert werden. Der Promiscuous Mode bezeichnet einen bestimmten Empfangsmodus für netzwerktechnische Geräte, wie bspw. den Funkknoten 23. In diesem Modus liest das Gerät 23 den gesamten ankommenden Datenverkehr 38a an die in diesen Modus geschaltete Netzwerkschnittstelle 35 mit und gibt die Daten zur Verarbeitung an das Betriebssystem 33 weiter.

### Zweite Ausbaustufe

In einer weiteren Ausbaustufe der vorliegenden Erfindung können zusätzliche Intelligenzfunktionalitäten, wie z. B. eine MANet-Funktion, berücksichtigt werden.

### Realisierungsmöglichkeit 3

Der erfindungsgemäße Funkknoten 23 kann auch ein Switchähnliches Verhalten aufweisen. Besitzt das Funksystem MANet-Funktionalitäten, kann grundsätzlich das Problem einer "Hidden Station" (vgl. Figur 6) gelöst werden. Als eine "Hidden Station" bezeichnet man ein Endgerät, das nur über ein anderes Endgerät erreicht werden kann. In Figur 6 wäre das bspw. das Endgerät 60, das ausschließlich über ein anderes Endgerät 61 des IP-Funknetzes erreicht werden kann.

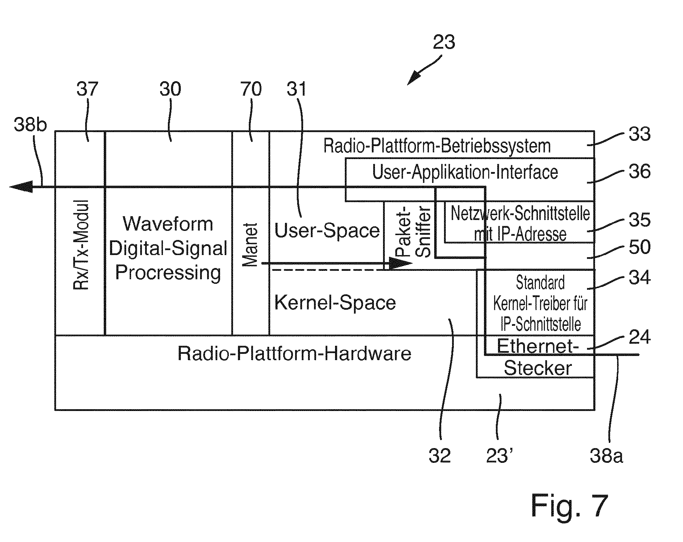

Eine Datenpaket-Sendung von Funkknoten 62 an den Knoten 60 oder umgekehrt kann nur über eine erneute Aussendung der Datenpakete über den Knoten 61 erfolgen. Hier muss die zu entwickelnde Software erweitert werden. Die Software in Knoten 61 muss entscheiden, ob ein Datenpaket für ein IP-Gerät 4 bis 8 bestimmt ist, das an den Knoten 60 angebunden ist. Dann muss das Paket vom Knoten 61 erneut ausgesendet werden. In diesem Fall muss die Software in Knoten 61 lernfähig sein, um den Datenverkehr so gering wie möglich zu halten. Zusätzlich zur Topologie-Information, die der MANet-Funktion 70 entnommen werden kann (vgl. Figur 7) muss auch bekannt sein, welche IP-Geräte 4 bis 8 hinter dem Knoten 60 angeschlossen sind und am Funkverkehr teilnehmen möchten. Dies kann z.B. bei erstmaligem Antworten eines IP-Gerätes 4 bis 8 "gelernt" werden. Im Ergebnis verhält sich dann das Funksystem 21 ähnlich einem Switch.

### Konfiguration eines Funkgerätes

Ein Funkknoten 23 benötigt für den Betrieb Angaben wie Wellenform, Betriebsart, Betriebs-Modes, Schlüssel, etc. Ein neuer Funkknoten 23 kann über Menus oder einen Webserver konfiguriert werden. Damit der Funkknoten 23 über das Netz, bspw. das IP-Funknetz 22, konfiguriert werden kann, benötigt er eine eigene Ethernet Adresse, über die er angesprochen werden kann.

Dies kann über verschiedene Arten bewerkstelligt werden. Über eine DHCP (Dynamic Host Configuration Protocol)-Anfrage beim Aktivieren oder per Menu bekommt der Funkknoten 23 für die Konfiguration automatisch eine Adresse zugewiesen. Beim Start des Funkknotens 23 am Netz 22 kann er die IP-Adresse bzw. die Netzmaske von einem DHCP-Server beziehen.

Alternativ erhält der Funkknoten 23 speziell für die Konfiguration eine IP-Adresse. Unter dieser Adresse wäre dann zum Beispiel ein Geräte-Web-Server erreichbar, um Einstellungen vorzunehmen. Unter einer weiteren Adresse könnte der Funkknoten 23 auch beispielsweise ohne Web-Interface über UDP (User Datagram Protocol) konfiguriert werden.

Sollte ein IP-Gerät (z. B. Voice-Over-IP-Telefon) 4 bis 8 in den Funkknoten 23 eingebaut sein, dann wäre dies wie ein IP-Endgerät 4 bis 8 zu behandeln. Folglich würde das eingebaute IP-Gerät 4 bis 8 eine IP-Adresse benötigen. Das IP-Gerät 4 bis 8 ist unabhängig von dem Funkknoten 23 zu behandeln.

Die vorliegende Erfindung hat insbesondere die nachfolgenden Vorteile:
- Ein Nutzer der Endgeräte 4 bis 8 kann sich auf die Konfiguration der Funkübertragung konzentrieren und benötigt kaum IP-Netzwerkkenntnisse. Eine Netzwerk-Konfiguration ist nicht erforderlich.
- Separate IP-Netze 10 bis 13 hinter den einzelnen Funkknoten 23 entfallen.
- IP-Geräte 4 bis 8 hinter den Funkknoten 23 können in ihrem eigenen Netz 10 bis 13 sein (bleiben), so als wären sie direkt über einen Switch miteinander verbunden.
- Hinter den Funkkoten 23 können auch gemischte IP-Netze 10 bis 12 angeschlossen werden.
- Jeder Funkknoten 23, der mit entsprechender Wellenform 30 ausgestattet oder konfiguriert ist, kann ohne Netzwerk-Konfiguration sofort nach dem Einschalten am IP-Datenverkehr teilnehmen. Der Funk-Hub/Switch ist voll dynamisch. Zu jeder Zeit können Funkknoten 23 zuund weggeschaltet werden, ohne dass eine Netzwerk-Konfiguration notwendig wird.
- Es sind keinerlei Routing-Einträge in Routing-Tabellen erforderlich.
- Es ist keine oder nur minimale Planungssoftware für die IP-Konfiguration der Funkknoten 23 notwendig.
- Im Prinzip können alle bestehenden Internet-Protokolle sofort und ohne weitere Konfiguration übertragen werden.

Über eine Black-List könnte man die Weiterleitung von ungewünschten Datenpaketen verhindern bzw. über eine WhiteList könnte man nur diejenigen Datenpakete übertragen, die auch tatsächlich an bekannte ausgewählte (militärische) IP-Adressbereiche adressiert sind, also an eine Sammlung aller möglichen IP-Netzwerk-Adressen (nicht IP-Adressen einzelner Geräte).

## Patentansprüche

1. Funkknoten (23) zum Einsatz in einem taktischen militärischen IP-Funknetz (21) als Schnittstelle zwischen einem Broadcast Funkkanal (22) des IP-Funknetzes (21) und mindestens einem an den Funkknoten (23) angeschlossenen Endgerät (4, 5, 6, 7, 8), **dadurch gekennzeichnet, dass** der Funkknoten (23) erste Mittel zur transparenten Weiterleitung aller von dem Broadcast Funkkanal (22) eingehenden IP-Datenpakete (38a) an alle angeschlossenen Endgeräte (4, 5, 6, 7, 8) aufweist.

2. Funkknoten (23) nach Anspruch 1, **dadurch gekennzeichnet, dass** dem Funkknoten zweite Mittel zum Empfang einer Rückmeldung von dem mindestens einen angeschlossenen Endgerät zugeordnet sind, für das bestimmte weitergeleitete IP-Datenpakete bestimmt waren.

3. Funkknoten (23) nach Anspruch 2, **dadurch gekennzeichnet, dass** dem Funkknoten dritte Mittel zugeordnet sind, um nach dem Empfang einer Rückmeldung in Zukunft die bestimmten IP-Datenpakete nur noch an das mindestens eine angeschlossene Endgerät weiterzuleiten, von dem die zweiten Mittel eine Rückmeldung empfangen haben.

4. Funkknoten (23) nach Anspruch 2 oder 3, **dadurch gekennzeichnet, dass** die zweiten Mittel zum Empfang einer Rückmeldung und/oder die dritten Mittel zum gezielten Weiterleiten der IP-Datenpakete an mindestens ein Endgerät als ein Switch oder ein Hub ausgebildet sind, der zwischen dem Funkknoten und den Endgeräten geschaltet ist.

5. Funkknoten (23) nach Anspruch 2 oder 3, **dadurch gekennzeichnet, dass** die zweiten Mittel zum Empfang einer Rückmeldung und/oder die dritten Mittel zum gezielten Weiterleiten der IP-Datenpakete an mindestens ein Endgerät als eine Funktionalität ausgebildet sind, die in den Funkknoten integriert ist.

6. Funkknoten (23) nach einem der Ansprüche 1 bis 5, **dadurch gekennzeichnet, dass** der Funkknoten mindestens eine Ethernet-Schnittstelle zum Anschluss der Endgeräte, des Switch oder des Hubs aufweist.

7. Funkknoten (23) nach einem der Ansprüche 1 bis 6, **dadurch gekennzeichnet, dass** der Funkknoten als ein Funkgerät ausgebildet ist.

8. Funkknoten (23) nach einem der Ansprüche 1 bis 7, **dadurch gekennzeichnet, dass** der Funkknoten vierte Mittel zum Einlesen und Auswerten zumindest von Adressinformationen der eingehenden IP-Datenpakete aufweist.

9. Funkknoten (23) nach Anspruch 8, **dadurch gekennzeichnet, dass** die vierten Mittel feststellen, ob die eingehenden IP-Datenpakete für den Funkknoten selbst bestimmt sind, und dass der Funkknoten die eingehenden IP-Datenpakete nur dann an die angeschlossenen Endgeräte weiterleitet, wenn die IP-Datenpakete nicht für den Funkknoten selbst bestimmt sind.

10. Funkknoten (23) nach Anspruch 8 oder 9, **dadurch gekennzeichnet, dass** die vierten Mittel feststellen, ob die eingehenden IP-Datenpakete von einer zulässigen Absenderadresse stammen und/oder für eine zulässige Empfängeradresse bestimmt sind, und dass der Funkknoten die eingehenden IP-Datenpakete nur dann an die angeschlossenen Endgeräte weiterleitet oder über den Broadcast Funkkanal (22) nur aussendet, wenn die IP-Datenpakete von einer zulässigen Absenderadresse stammen und/oder für eine zulässige Empfängeradresse bestimmt sind.

11. Funkknoten (23) nach Anspruch 10, **dadurch gekennzeichnet, dass** die zulässigen Absenderadressen und/oder die zulässigen Empfängeradressen in einer Whitelist in dem Funkknoten abgespeichert sind.

12. Funkknoten (23) nach Anspruch 10 oder 11, **dadurch gekennzeichnet, dass** die unzulässigen Absenderadressen und/oder die unzulässigen Empfängeradressen in einer Blacklist in dem Funkknoten abgespeichert sind.

13. Funkknoten (23) nach einem der Ansprüche 1 bis 12, **dadurch gekennzeichnet, dass** der Funkknoten fünfte Mittel zum Ermitteln und Abspeichern von Informationen bezüglich über den Funkknoten erreichbare andere Funkknoten des IP-Funknetzes und der an diese anderen Funkknoten angeschlossenen Endgeräte aufweist.

14. Funkknoten (23) nach Anspruch 13, **dadurch gekennzeichnet, dass** die fünften Mittel nur Informationen bezüglich der ausschließlich über den Funkknoten erreichbaren anderen Funkknoten des IP-Funknetzes und der an diese anderen Funkknoten angeschlossenen Endgeräte ermitteln und abspeichern.

15. Taktisches militärisches IP-Funknetz (21) mit mehreren Funkknoten (23) als Schnittstelle zwischen einem Broadcast Funkkanal (22) des IP-Funknetzes (21) und mindestens einem jeweils an einen der Funkknoten (23) angeschlossenen Endgerät (4, 5, 6, 7, 8), **dadurch gekennzeichnet, dass** die Funkknoten (23) des IP-Funknetzes (21) erste Mittel zur transparenten Weiterleitung aller von dem Broadcast Funkkanal (22) eingehenden IP-Datenpakete (38a) an alle angeschlossenen Endgeräte (4, 5, 6, 7, 8) aufweist.
